# EUROPEAN PATENT SPECIFICATION

(11) **EP 2 317 367 B1**
(45) Date of publication and mention of the grant of the patent: **13.03.2013**
(21) Application number: 09382231.0
(22) Date of filing: 28.10.2009
(51) Int. Cl.: G02B 27/22, H04N 13/00, G02B 27/00

(54) **Stereoscopic reproduction system**
Stereowiedergabesystem
Système de reproduction stéréoscopique

(43) Date of publication of application: 04.05.2011
(73) Proprietor: Dominguez-Montes, Juan, 28231 Las Rozas-Madrid (ES)
(72) Inventor: Dominguez-Montes, Juan, 28231 Las Rozas-Madrid (ES)
(74) Representative: ABG Patentes, S.L.

(56) References cited:
- WO-A1-2008/139181
- WO-A2-2006/119760
- DE-A1- 19 537 499
- DE-A1-102006 004 300
- US-A1- 2005 046 795

## Description

### TECHNICAL FIELD OF THE INVENTION

The field of application of the invention falls within the industrial sector of stereoscopic image reproduction.

### OBJECT OF THE INVENTION

The stereoscopic reproduction system that is the object of this invention is characterised in that the images reproduced on a conventional device that differentiates the images of each eye by means of any of the currently marketed processes, may be observed by any number of observers, allowing free head movement thereof and without the need for any device before their eyes.

### DESCRIPTION OF THE RELATED ART

The system described in this invention belongs to the group of so-called stereoscopic systems, a term used herein to define systems that use two single images in capture and reproduction, one for each eye.

Many processes have been used that allow the corresponding image to be sent to each eye. Firstly, there are those that require the observer to use glasses with different filters: polarised, coloured, shuttered, deviating mirrors or prisms, or to keep his/her head still which, despite being a serious annoyance, has not prevented their use from becoming widespread. This difficulty seems to have been resolved in systems which, apart from freeing the observer from the need to hold a viewing device before their eyes, use a small number of images.

Application PCT/US93/08412 by Eichenlaub, which discloses a stroboscopic lighting system, uses only two images for a single observer. European patent application EP0576106Al by the same author describes a system that is suitable for a larger number of observers, but with their eyes focused on a plane. European patent EP0656555 by Woodgate also describes a device with similar characteristics to those of the foregoing. The lighting systems used in prior documents are reasonably simple when used for one or very few observers, but in order to cover wide areas with randomly located observers they require a complex design that is expensive to manufacture.

There are systems that allow reproduction on conventional diffusing screens with a small number of images, such as those disclosed in German patent DE4123895 by D. Dieter and European patent EP0114406 by Meachan, G.B. Kirby, but which need to place an obturation panel, preferably of liquid crystal, before and near the observer.

Systems considered to precede this invention generally comprise three devices. A first image reproduction device, a second device capable of focusing the light beam stemming from this reproducer onto the corresponding eye of the observer, and a third device that detects the movement of the observer's head and refocuses the light beam onto the new position. The image reproduction device may in turn comprise a screen where images are reproduced using transparency as in the case of a liquid crystal or using a conventional projector. Likewise, the focusing device may be a converging optical element or a retroreflective element.

In the systems disclosed by David Ezra, EP0808351A2, and Dominguez-Montes, US20070041094A1 and EP1378783, the image reproduction system must necessarily use transparency, as in the case of a liquid crystal that does not contain any diffusing element on its surface or in its interior. The images differentiate between themselves by multiplexing over time and light up with a device synchronised with the reproduced image. The focusing optical device used distinguishes between the systems described in EP0708351A2 and EP1378783, as a conventional or Fresnel converging lens or mirror is used in EP0708351A2 and a retroreflective element is used in EP1378783.

In the system disclosed by Susumu Takahaschi and Kazuo Morita in US2003/0214710 A1 and also in that disclosed by Angus Ducan Richard in US5,671,992 and in application PCT W0097/46912, a different conventional projector is used for each observation eye, i.e. as many pairs of conventional image projectors as there are observers, which implies the existence of as many image reproduction elements as there are eyes. The systems described in these documents differentiate between themselves basically by the focusing optical device used, which is a conventional or Fresnel converging lens or mirror, that used in US2003/0214710 A1, and a retroreflective element, that used in US5,671,992 and W0097/46912.

Given that in a conventional projector the image reproduction element and projection lens cannot change their relative alignments, when the projector changes its position to track the movement of the observer's head, the projected image also changes its position. In order to avoid the movement of the image projected on the focus plane, the tilt angle of the optical axis of the projector, which is no longer perpendicular to this plane, must be changed. This change in the tilt angle of the optical axis of the projector in systems preceding this invention firstly causes a deformation in the projected image resulting from the movement of the projector which, in turn, depends on the movement of the observer's head, in addition to a complication in the electro-mechanical tracking device that must incorporate this change in the tilt angle of the optical axis of the projector. In US2003/0214710 A1, embodiments of the tracking device with a Fresnel mirror and Fresnel lens are disclosed.

Additionally, a conventional projector has sufficient luminous intensity to project an image onto a surface of up to several square metres in size. The drawback derived from the use of this high luminous intensity, together with a luminous output of the focusing system of nearly one, is that the luminous intensity that reaches the eye, once focused, is practically identical to that emitted by the projector. Therefore, the luminous intensity emitted by a projector and fully focused onto an eye is excessive and sufficient to blind it.

On the other hand, in a conventional projector the calorific energy dissipated by the luminous source requires the presence of a heat dissipation device which, together with the optical lighting and optical colour generation systems, occupy a large space and are quite heavy, due to which it must be pointed out that the excessive size of the projector impedes positioning the optical centres, of the pair of projection lenses corresponding to a single observer, at the distance required by the separation between the eyes of an average observer, which is approximately 65 mm. For the same reason, it is very difficult to position the two pairs of projectors corresponding to two adjacent observers located close to each other at the adequate distance. Additionally, their excessive weight also requires the use of high-power electro-mechanical elements for rapidly tracking head movements, as in US5, 671, 992, and a complex tracking mechanism, as in US5,671,992 and W0097/46912.

In conventional projectors the image reproduction element (liquid crystal or micro-mirrors) housed in its interior must be small in size and therefore the optical projection system will also have a small focal length f (to the order of 100 mm), in order for the projected image to cover a sufficiently wide surface. As the exit pupils of the lenses are usually proportional to their focal lengths, they are generally small in size. Consequently, the size of the pupil is insufficient for the observer to experience comfortable viewing once focused onto the eye (see for example US5,671,992 or US2003/0214710 A1).

It is impossible to obtain a vertical pupil size sufficiently wide so as to prevent tracking of the observer's head in that direction. The solution of adding a rectangular lens to the conventional lens would imply fully redesigning the optical projection system.

In all the systems of the aforementioned documents (for example, in US5,671,992 and US2003/0214710) the movement of the observer's head is detected using an independent camera for each observer. Consequently, as many detection cameras are required as there are observers. Additionally, the software that interprets the signal captured by the camera and which controls the complex electro-mechanical tracking elements (US5,671,992) must take into account the scale aberrations introduced by the focusing device and the distance from the observer and the camera to said device.

### SUMMARY OF THE INVENTION

One of the objects of the invention is to resolve the aforementioned problems by means of a stereoscopic reproduction system, according to claim 1, and a stereoscopic reproduction method, according to claim 16. The dependent claims define preferred embodiments of the stereoscopic reproduction system of the invention.

As mentioned earlier, at present there are different systems for the stereoscopic reproduction of film and television on different types of opaque diffusing screens which can belong to reproducers such as: cathode ray tubes, plasma screens, television projectors, film projectors, LEDs (Light Emission Devices) matrices, etc. or on a transparence reproduction screen as in the case of liquid crystal reproducers and where the two images that compose the stereoscopic pair differentiate between themselves using any of the already established systems, whether due to being linearly polarised in planes perpendicular to each other, right and left circularly polarised, respectively, reproduced in different colours, as in the so-called anaglyph and Infitec systems, multiplexed over time or occupying different places on the reproduction screen. They all require the use of glasses with filters: polarised, coloured, shuttered or with prisms or deviating mirrors for observation thereof.

The system that is the object of this invention works with any of the previous reproduction screens, allowing any number of observers to correctly view the stereoscopic image without having to use glasses or any other viewing device before their eyes and being able to freely move their heads. Specifically, the system of the invention comprises:
- a focusing optical device that converts any bundle of incident light rays, homocentric at a first point, into a bundle of emergent rays homocentric at a second point different than the first, where there is an eye of an observer;
- at least one pair of converging and image reversing optical devices, each converging and image reversing optical device being associated to an eye of an observer and comprising
   a converging optical element, the optical centre of which is positioned in the first point, in such a manner as to form one selected between the two differentiated images of a stereoscopic pair on the focusing optical device, of the same size as its optical object located on a projection screen, and
   an image reverser integral with the converging optical element to produce horizontal optical reversal;
- a discriminating means associated to each pair of converging and image reversing devices for selecting each of the two constituent images of the stereoscopic pair;
- a mobile platform for each pair of converging and image reversing devices, wherein each platform supports a pair of said converging and image reversing devices and their discriminating means, and wherein each platform is moved by an electromotive element, the movement of which is governed by an electronic unit that in turn receives the signal from a matrix of photosensitive elements whereon the first focusing optical device forms the image of the observer.

In order to explain the operation of the system that is the object of this invention, each of its three basic constituent parts is described below.

The first component of the system that is the object of the invention is a focusing optical device that must fulfil the property that any bundle of incident light rays homocentric at a first point will have another corresponding bundle of emergent light rays homocentric at a second point, different than the first.

The function of this device within the system of the invention is, firstly, the same as in some of the aforementioned systems of the state of the art, i.e. to act as a retroprojection screen, as the constituent images of the stereoscopic pair are projected onto its surface, and to direct each of these images towards the corresponding eye of each observer and, secondly, specifically in the system that is the object of this invention, to form the image of the head of the observer, considered an optical object, on a matrix of photosensitive elements capable of detecting its position and movement.

In one embodiment, this first component comprises a screen formed by a matrix of retroreflective elements and a semi-transparent lamina. If it were to consist of a matrix of simple retroreflective elements, each of these simple retroreflective elements would be formed by a regular tetrahedron having specular flat faces, i.e. three flat specular surfaces perpendicular to each other at right angles.

The optical property of these retroreflective elements is that they ensure reflection, in the same and opposite direction, of any incident light ray. Under these conditions, any bundle of rays, homocentric at one point, incident upon the surface that constitutes the retroreflective screen is then converted, after reflection, into a bundle of rays, homocentric at the same point, but travelling in the opposite direction.

The semi-transparent flat surface will be positioned at a non-null angle to the flat surface that constitutes the retroreflective screen. This semi-transparent lamina acts as an optical element capable of separating the incident and reflected bundles. If the divergent light bundle passes through the semi-transparent lamina and the converging light bundle is reflected by it, or vice versa, the points of convergence and divergence of these light bundles will occupy different physical places.

In a variant of the previous embodiment, a second retroreflective screen may be disposed perpendicular to the previous one in order to enhance the brightness of the system.

In a second embodiment, the focusing optical device comprises a specular spherical surface or converging Fresnel mirror, equal or larger in size than that of the stereoscopic image to be reproduced. If the bundle of light rays diverges from a point other than the centre of the curvature and at a distance from its focal plane, the bundle of rays reflected will converge in a point at a different physical location than that occupied by the point of divergence, achieving between these points an effect similar to that obtained with the use of the previously described semi-transparent lamina.

In a third embodiment, the focusing optical device comprises a conventional converging or Fresnel lens equal or larger in size than that of the stereoscopic image to be reproduced. Any light bundle that diverges from any point at a distance from its focal plane after passing through the lens will converge in another point located at a different physical location than the foregoing.

Regardless of the embodiment of the focusing optical device, if each eye of each observer is considered a point of luminous convergence there will be another point of luminous divergence, referred to herein as the conjugated point of the point occupied by the eye, which will be located elsewhere. There will be as many pairs of points of luminous divergence as there are pairs of observing eyes or observers, and the second constituent component of the system will be disposed on each of these points of divergence.

The second constituent component of the system that is the object of the invention comprises a pair of converging optical devices and a pair of image reversers per each observer.

The function of the converging and image reversing optical device is threefold. Firstly, it must capture one of the two constituent images of the stereoscopic pair reproduced on the conventional reproduction screen and project it onto the focusing optical device. In order for the relative movements of the image with respect to the converging optical element to have the same value as the relative movements of the object with respect to this same element, this image and its object must be identical in size. There are several ways of achieving identicality in size between the object and its image.

In one embodiment, when the distances from the object, that is captured on the reproduction screen, and the image, that is projected onto the focusing optical device, to the optical converging element are identical, it is sufficient for the converging optical element to have a focal length equal to half of that distance.

In a second embodiment, when the distance from the converging optical element to the reproduction screen is different to the distance from the converging optical element to the focusing optical device, these distances can be equalized by interposing at least two flat specular surfaces that will increase the length of the smaller optical path. In this case, the focal length of the converging optical device must be equal to half of said equalised length.

In an alternative embodiment, when the distance from the converging optical element to the reproduction screen is different to the distance from the converging optical element to the focusing device, the sizes of the images can be equalized by interposing a telescopic system in the optical capture path. Said telescopic system must have null optical power and an angular magnification equal to the quotient of the optical distances that separate the converging optical element from the reproduction screen and the focusing device. In this case, the focal length of the converging optical element must be equal to half of the optical projection path.

The second function of these converging optical devices is that of serving as an optical object for the focusing optical device which, in turn, will form the image of the exit pupil of the converging optical device on the corresponding eye of the observer. In order for the observer to comfortably view the image of the pupil, it must have a rectangular shape approximately 65 mm in width, which is considered the average distance between the eyes of the observer. The optical object, which is the exit pupil of the converging optical element, must have this same size and shape.

Given that the focal length of the converging optical elements condition their pupil sizes, this distance must have a high value, which will be possible if the value of the distance from the converging element to the reproduction screen is also high. In one embodiment, the vertical size of this pupil can be sufficiently large so as to allow it to cover the vertical movement of the observer's head, thereby avoiding tracking in that direction.

The third function is that of maintaining the image projected onto the focusing optical device with the same size as the object without suffering deformation, regardless of the position occupied by this device in its movement to track the observer's head. As mentioned earlier, the movements of the object and the image with respect to the converging optical device are identical, although their direction is opposed. For this reason, in order not to alter the relative positions of the image and the optical object, an image reverser is interposed in the optical path that will reverse the direction of movement.

In a preferred embodiment, the reversing device of the invention comprises two flat specular surfaces perpendicular to each other, for horizontal reversal, if this is the direction of movement of the observer, and in a variant of embodiment it additionally comprises another two flat specular surfaces perpendicular to each other for vertical movement if it were also necessary. These reversing devices move solidarily with the converging optical element. In order for the image and the object to remain geometrically similar to each other, the tilt angle of the optical axis of the converging device and image reversing device must not be altered during movement thereof. The flat specular surfaces may be built, for example, of flat mirrors or total reflection prisms.

The system that is the object of this invention has as many converging and image reversing devices as there are observing eyes. Those corresponding to the observers' right eyes all have the same and sole luminous object, which is the image corresponding to the right eye of the stereoscopic pair; similarly, the left image of the stereoscopic pair shall be the only luminous object of each and every one of the conjugated converging elements of each left eye.

When the differentiation between the images is carried out by polarisation, colouring or multiplexing over time, a discriminating element, understood as an element capable of selecting one of the two constituent images of the stereoscopic pair, will be disposed before each converging optical device of a pair associated to an observer. The discriminator may be one of the constituent filters of the glasses used for stereoscopic viewing: polarised, coloured or shuttered, that will select a single image between the two that compose the stereoscopic pair and which are reproduced on this conventional screen.

If the differentiation is established based on the different position of the images on the reproduction screen, in order to discriminate each image it is sufficient to tilt in a proper manner each of the optical axes of the converging elements that constitute the pair corresponding to each observer or the flat specular surfaces that compose the reversing system, until ensuring that the adequate image reaches each eye. The two images that constitute the pair may be disposed next to each other left and right or up and down on the same unit or separated from each other and reproduced in different units. In this case the discriminating element will correspond to the tilt angle of the optical axes of the converging elements and/or to the means responsible for said tilt angle. The tilt angle of the optical axes of the converging elements, while being sufficient to discriminate the images based on their position, is negligible in terms of deformation of the reproduced images.

Each observer will have a pair of converging elements disposed at the conjugated points of the points where the eyes of said observer are positioned.

If the observer moves his/her head, these elements must also move adequately in order to ensure correct stereoscopic vision.

The focusing optical device, the first component of the system that is the object of this invention, also forms the image of the observer's head, considered a luminous object, in the plane that contains the converging devices. If the observer considered as being an optical object moves, so does the image thereof formed on this plane. The movement required by the converging devices so that light continues to be correctly concentrated in each of the observer's eyes is the same as the movement experienced by the image thereof on the aforementioned plane.

In order to correctly track the observer's head, the stereoscopic reproduction system of the invention has a matrix of photosensitive elements in the plane that contains the converging devices, which are capable of detecting the movement of the image thereon, generating a signal that is sent to an electronic unit which simultaneously governs electromobile elements that cause the same movement of the pair of converging elements as that experienced by the image of the observer's head in that plane.

The assembly formed by the matrix of photosensitive elements, the electronic unit and the electromobile elements operates as a self-correcting servo-mechanism that constitutes the third constituent element of the system that is the object of this invention and which is intended to cause the movement of the pair of projection and image reversing devices in accordance with the movement of the observer's head.

Flat mirrors or prisms may be interposed in the path of the light rays in order to modify their trajectory and/or increase the optical path. These modifications should be considered as being included in this invention, as the introduction of these elements with null optical power, an angular magnification of nearly one and lack of movement should not be considered a differentiation of the system that is the object of this invention.

The only point in common between the system that is the object of this invention and systems of the state of the art is the focusing device which, apart from being used, as in these systems, to focus the stereoscopic image onto the corresponding eye of the observer, is also used to capture the position of the observer's head. Nevertheless, the system that is the object of this invention may use any of the two previously mentioned focusing devices.

In turn, the system that is the object of this invention is differentiated from and surpasses the systems disclosed in EP0708351A2 and EP1378783, wherein images can be reproduced on any conventional diffusing surface, such as cathode ray tubes, plasma screens, conventional liquid crystal screens without special lighting devices, LED-based surfaces, front or rear projection screens, etc., the images being able to be differentiated, not only by multiplexing over time but also by any of the processes currently in use, whether by linear or circular polarisation, by colour polarisation: anaglyphs or Infitec, or based on their position.

The system that is the object of this invention has significant advantages over systems that use conventional projectors, such as those of US5,671,992, US2003/0214710 A1 and W0097/46912, because it uses two single images for reproduction, one for all the right eyes and another for all the left eyes. Each reproduced image and the optical axis corresponding to the converging projection device can change their relative positions, thereby allowing, with the help of one or two additional optical reversing systems, said optical axis to always be perpendicular to the focalisation plane, regardless of its movement. Consequently, perspective deformation in the projected image does not occur in the system that is the object of this invention due to the fact that projection is always perpendicular to the plane that contains the focusing device, regardless of the position of the observer's head, and the electro-mechanical tracking device is very simple.

Advantageously, the system that is the object of this invention does not require its own light source to send the necessary light intensity to allow comfortable viewing to each eye, due to which the optical device also lacks a heat dissipation device for the optical lighting system and image reproduction element, thereby easily overcoming the drawbacks derived from the excessive size and weight of conventional projectors, given the small size and light weight of the optical stereoscopic reproduction system according to the invention.

In a preferred embodiment of the invention, the projection distance is equal to the viewing distance and the focal length F of the optical projection elements is equal to half the viewing distance, which can be sufficiently large to allow:
- a wide exit pupil with simple optical designs
- a pupil having the adequate shape and sufficient size to avoid the vertical tracking movement of the observer's head.

In the system that is the object of this invention, due to the small size and light weight of the mobile parts and to the simplicity of its movement, as the tilt angle of the optical axis of the projector device does not have to be modified, the position of the observer's head can be obtained by means of a simple matrix of photosensitive elements whereon the focusing device itself forms the observer's image. Consequently with the system that is the object of this invention:
- No camera is required to detect the position of the observer's head.
- Scale aberrations of the focusing system are neutralized because the position of the observer's head is also detected using the same optical device.
- The same device is valid for all observation distances.

These and other aspects of the invention shall be evident hereinafter and will be clarified with reference to the embodiments described later in the document.

### BRIEF DESCRIPTION OF THE FIGURES

In order to complement this description and with the object of helping to better understand the characteristics of the invention, a set of drawings, in accordance with a preferred example of practical embodiment thereof, has been included as an integral part of said description, wherein the following have been represented in an illustrative and non-limiting manner:
- Figs. 1-5: show different embodiments of the focusing optical device;
- Fig. 6: shows two conventional projectors such as those used in the state of the art;
- Figs. 7-11: show any of the focusing devices represented in figures 1 to 5, operating with conventional projectors;

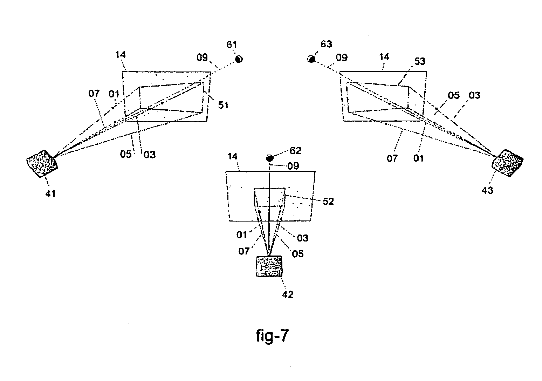

- Fig. 7: shows the geometric deformation of the projected image based on the horizontal movement of the observer's head in conventional systems;

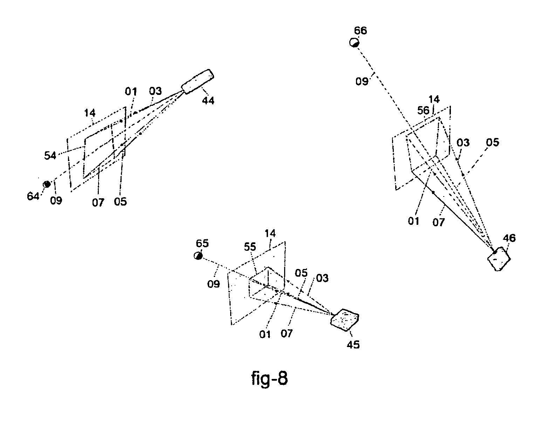

- Fig. 8: shows the geometric deformation of the projected image based on the vertical movement of the observer's head in conventional systems;

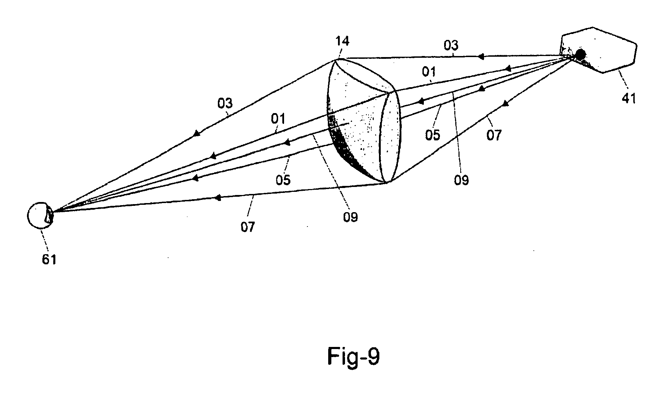

- Fig. 9: shows the concentration of the light bundle on the observer's eye in conventional systems;

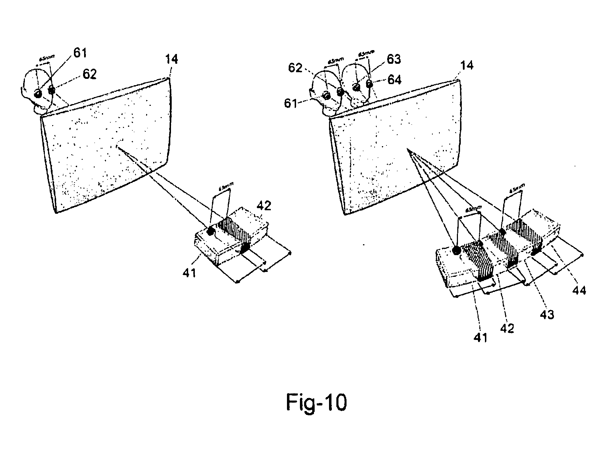

- Fig. 10: shows the impossibility of positioning the optical centres of the projectors at the average distance between the eyes of an observer, 65 mm, or at that required by the distance between the eyes of two adjacent observers in conventional systems;

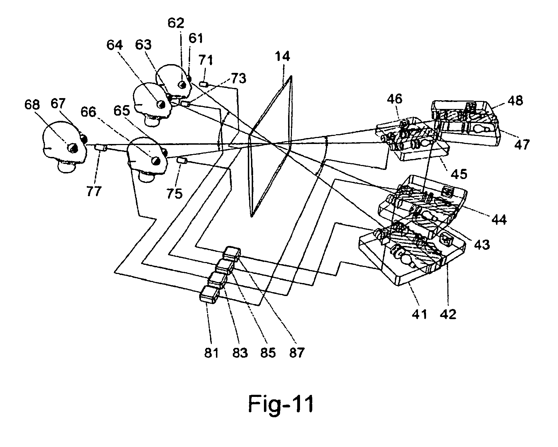

- Fig. 11: shows the layout of multiple conventional projectors operating with several observers in the systems of the state of the art;

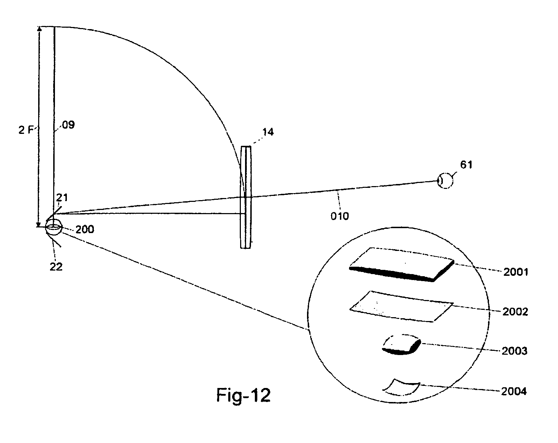

- Fig. 12: shows a converging optical and image reversing device according to the invention;

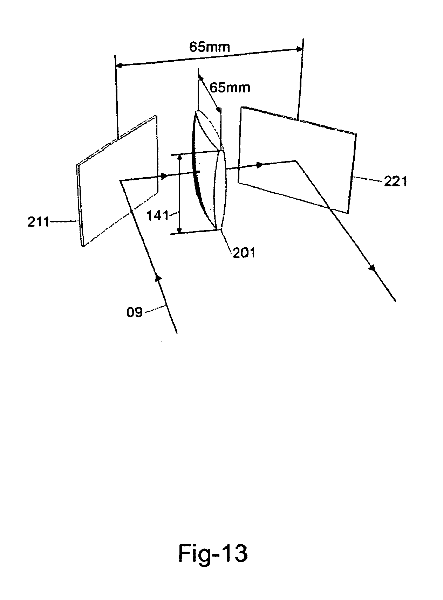

- Fig. 13: shows a converging optical and image reversing device corresponding to an eye;

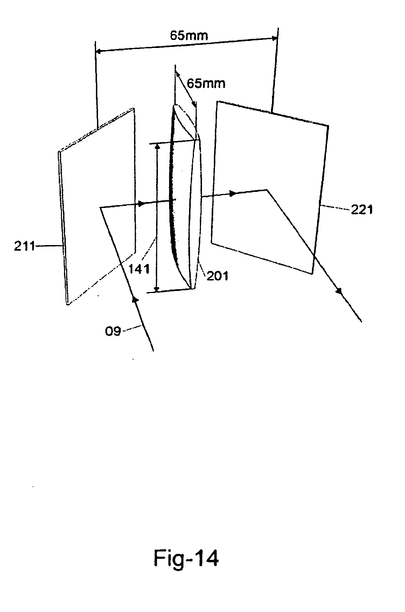

- Fig. 14: shows a rectangular converging optical and image reversing device having sufficient height to avoid the vertical tracking movement of the observer's head;

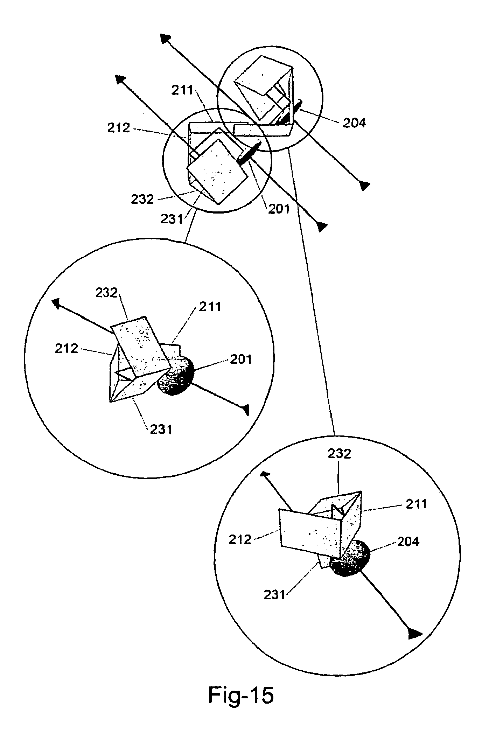

- Fig. 15: shows two converging optical systems having two optical reversals each, one for the horizontal direction and another for the vertical direction;

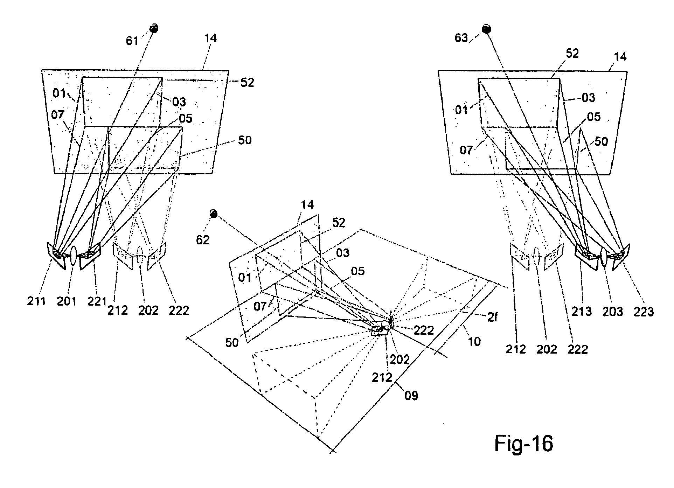

- Fig. 16: shows how the projected image does not suffer geometric deformation in the system that is the object of this invention during horizontal tracking of the observer's head;

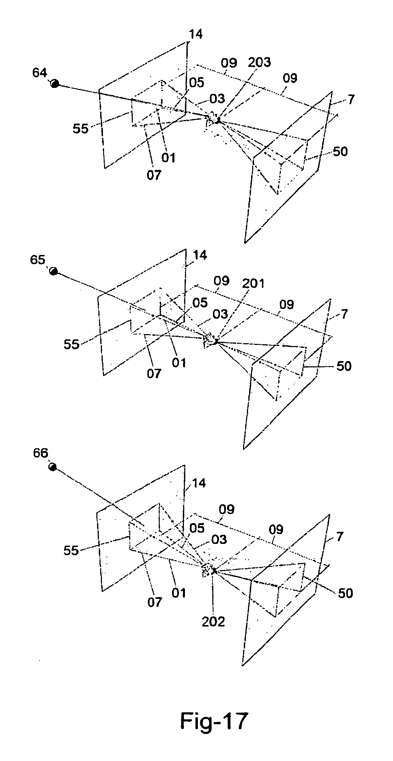

- Fig. 17: shows how the projected image does not suffer geometric deformation in the system that is the object of this invention when the second constituent element of the system tracks the vertical movement of the observer's head;

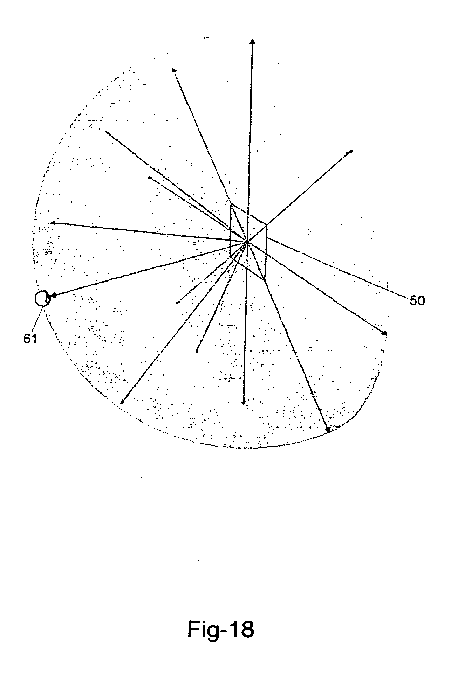

- Fig. 18: shows the luminous flux that reaches the observer's eye in a conventional reproduction;

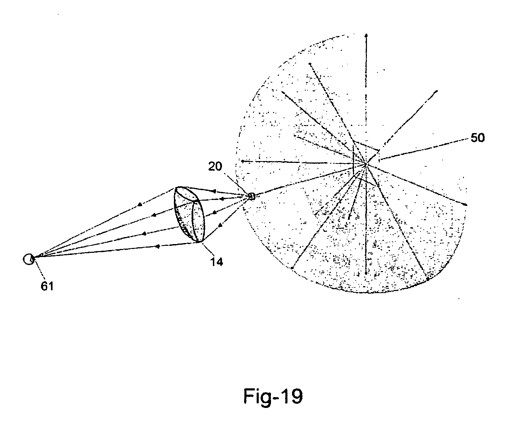

- Fig. 19: shows the luminous flux that reaches the observer's eye in the system that is the object of this invention;

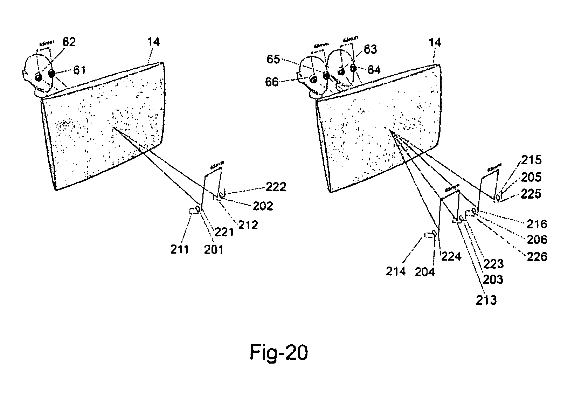

- Fig. 20: shows the simplicity wherewith the system that is the object of this invention can position the optical centres of the converging elements at the distance required by the average distance between the observer's eyes, 65 mm, or at that between the eyes of two adjacent observers;

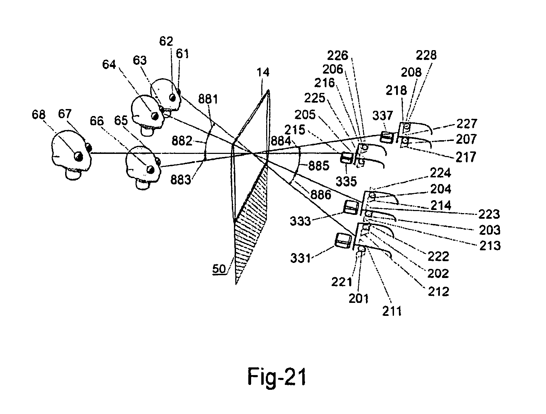

- Fig. 21: shows an example of the assembly of the different components in the system that is the object of this invention;

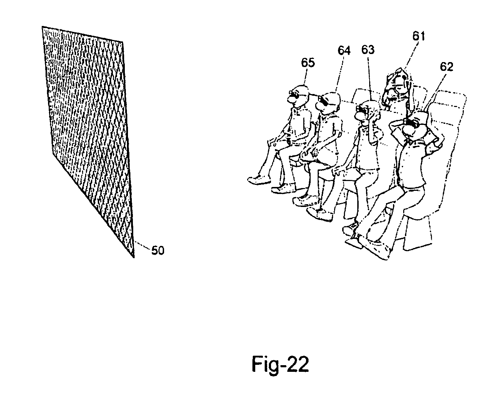

- Fig. 22: shows several observers using glasses for viewing a conventional reproduction;

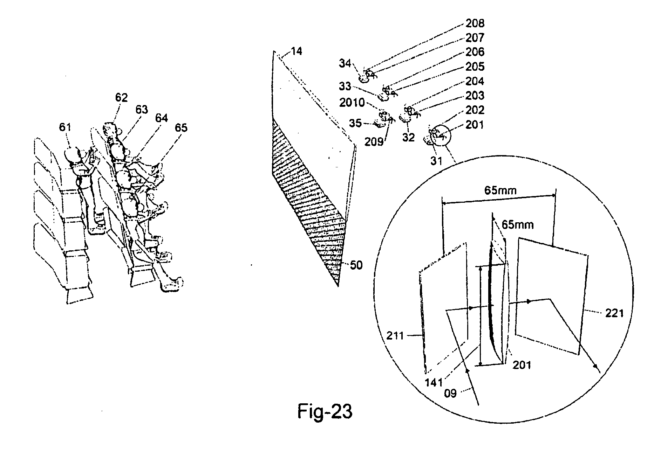

- Fig. 23: shows several observers viewing a conventional stereoscopic reproduction without need for glasses, using the system that is the object of this invention, when the second component of the system only uses horizontal reversal;

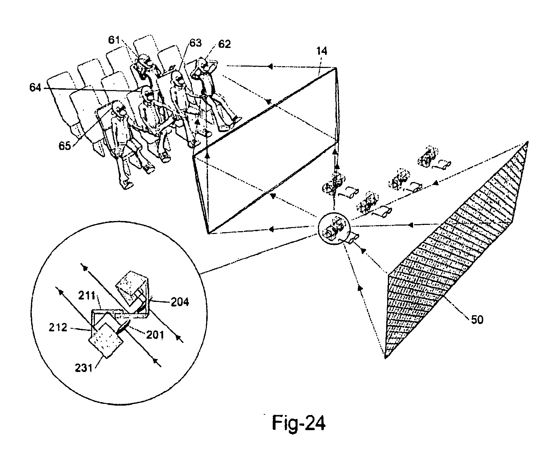

- Fig. 24: shows several observers viewing a conventional stereoscopic reproduction without need for glasses, using the system that is the object of this invention, when the second component of the system uses horizontal and vertical reversal;

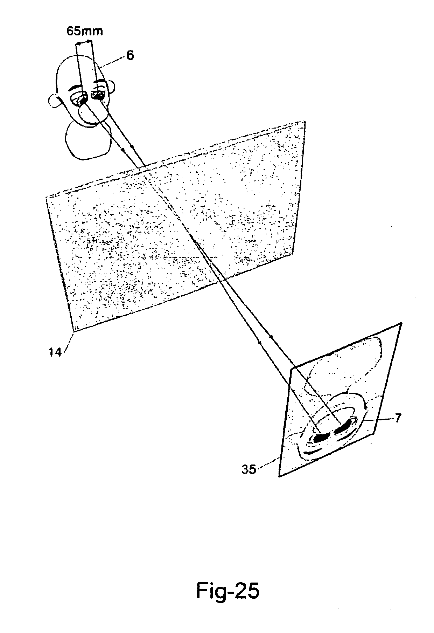

- Fig. 25: shows the projected image of the observer's head on the plane that contains the pair of converging elements;

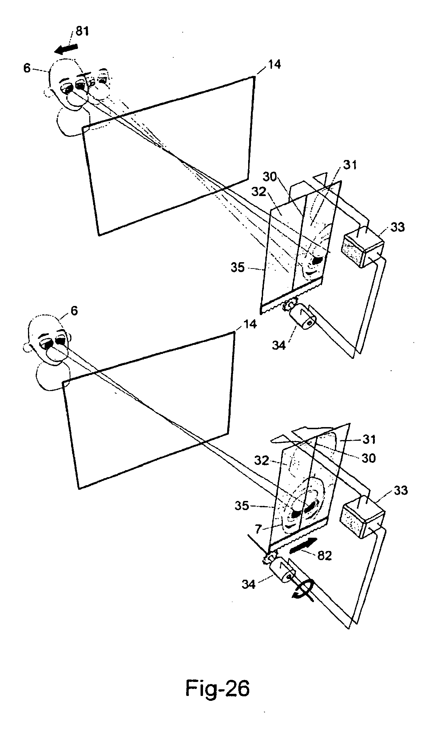

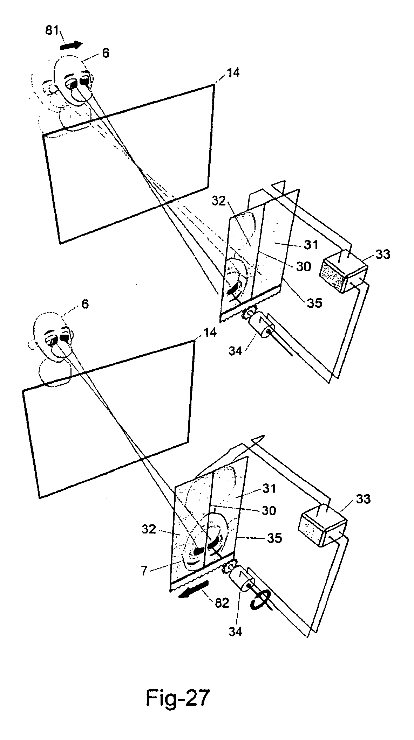

- Figs. 26 and 27 show: the third constituent element of the system that is the object of this invention, which is a self-correcting servo-mechanism comprising a matrix of photosensitive cells, an electronic unit and an electromotive element and the reaction of said servo-correcting mechanism to the left and right movement of the observer's head, respectively;

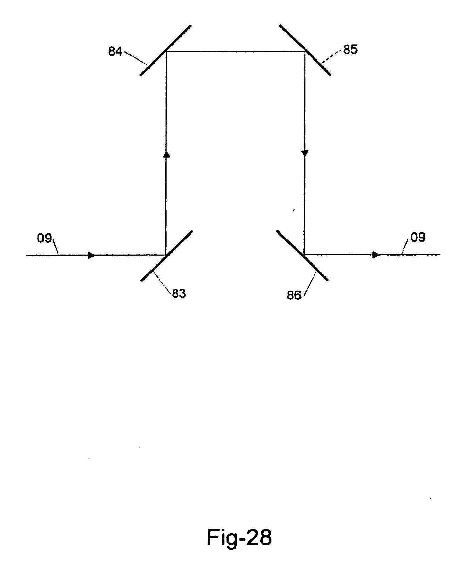

- Fig. 28: shows the layout of several flat mirrors used to increase the optical projection path;

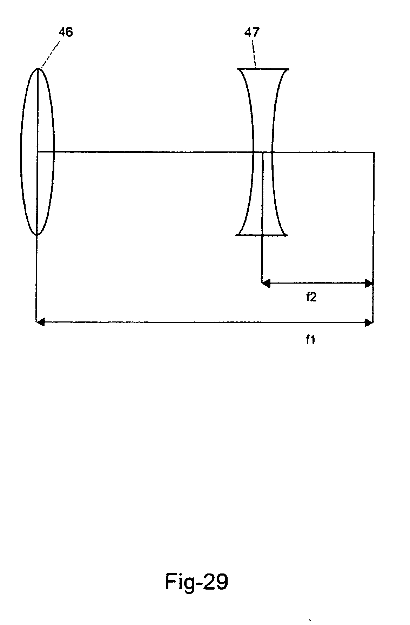

- Fig. 29: shows a Galilean-type telescopic system;

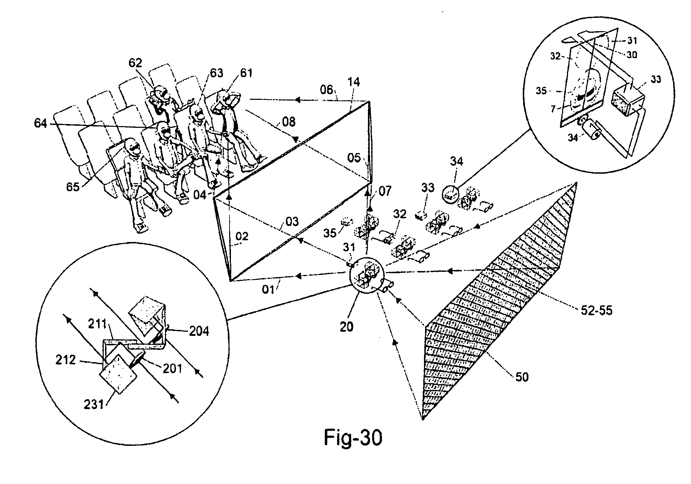

- Fig. 30: shows several observers viewing a conventional stereoscopic reproduction without need for glasses, using the system that is the object of this invention, when the second component of the system uses horizontal and vertical reversal and also shows the tracking system of the observer's head in detail;

In all the figures, the same reference numbers refer to the same elements.

### DETAILED DESCRIPTION OF A PREFERRED EMBODIMENT

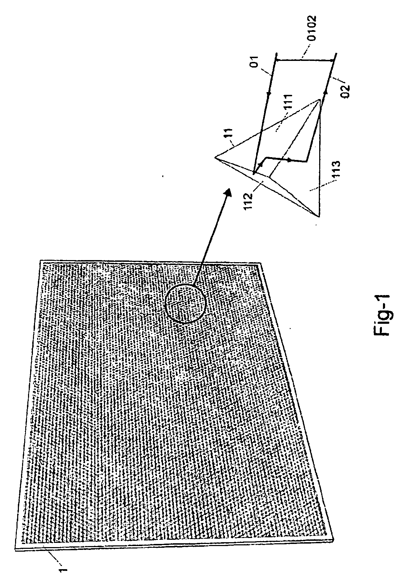

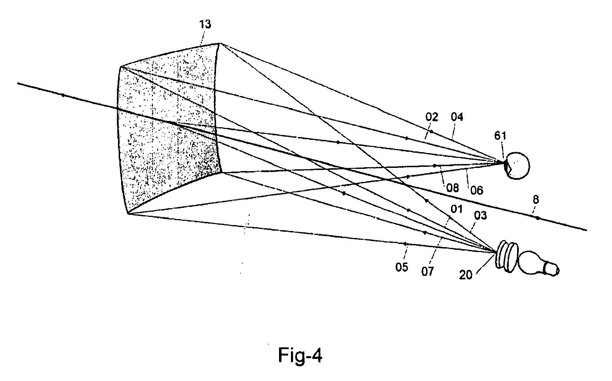

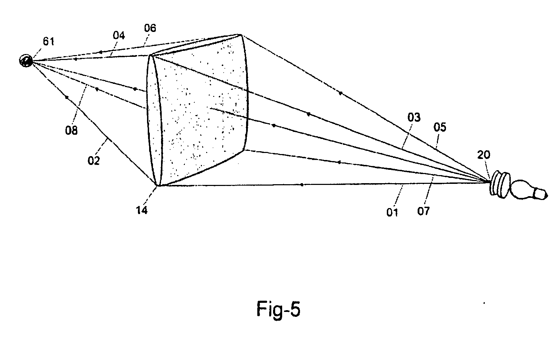

Figures 1 to 5 show different embodiments of the focusing optical device, the first component of the system that is the object of this invention, schematically represented in figure 30. Said focusing optical device comprises retroreflective elements in figures 1, 2 and 3, a converging mirror in figure 4 and a converging lens in figure 5.

Figure 1 shows a focusing optical device that comprises a retroreflective screen (1), the size of which must be equal to or greater than that of the stereoscopic image to be reproduced, composed of a large number of small simple retroreflectors (11). The retroreflective elements consist of three flat specular surfaces (111, 112, 113) perpendicular to each other at right angles. Any ray of light incident (01) on the simple retroreflective element is reflected in a parallel direction and in the opposite direction (02). In the specific case of this invention the directions of the incident and reflected rays (01 and 02) are considered coincident because the distance (0102) is considered insignificant due to the small size of the retroreflective element (11).

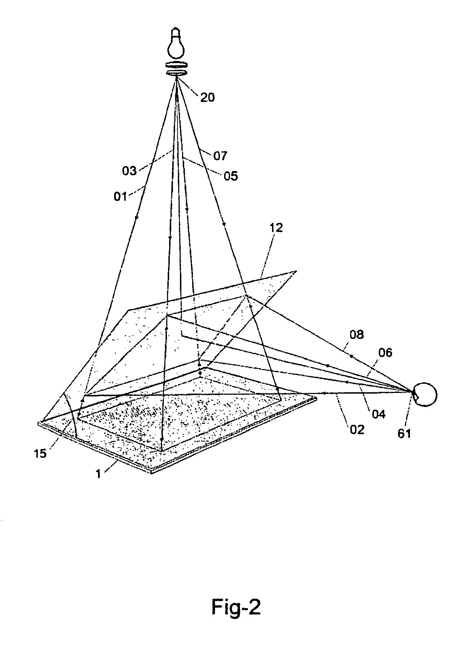

Figure 2 shows a schematic view of the operation of a single retroreflective screen (1) which, together with the semi-transparent lamina (12), forms a non-null angle (15), a light source (20) or luminous point of divergence and a luminous point of convergence (61). Any bundle of rays (01, 03, 05, 07) homocentric at a first point (20) that passes through the semi-transparent lamina (12) after having been reflected by the screen (1) is newly reflected by said lamina (12), forming a convergent bundle of rays (02, 04, 06, 08) homocentric at a second point (61).

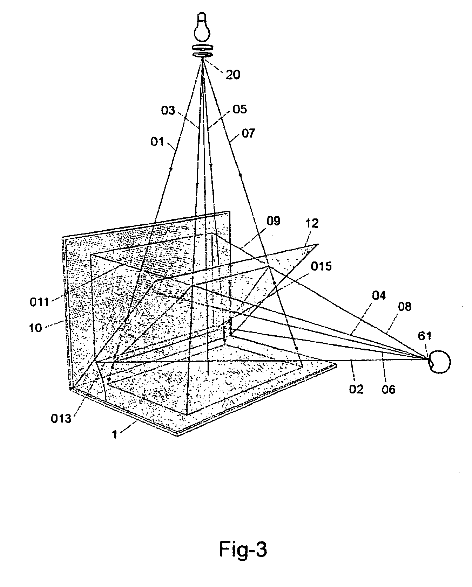

Figure 3 shows a schematic view of the operation of two retroreflective screens perpendicular to each other (1, 10) together with a semi-transparent lamina (12), a light source (20) or luminous point of divergence and a luminous point of convergence (61). This layout constitutes a variant of embodiment of the focusing optical device shown in figure 2 aimed at enhancing luminous output, as the light rays (09, 011, 013, 015) which are now reflected by the screen (10) are also concentrated on the luminous point of convergence (61).

Figure 4 shows a spherical specular surface (13) or a converging Fresnel mirror acting as a focusing device, a light source (20) or luminous point of divergence disposed outside of its centre of curvature (8) and a luminous point of convergence (61). The size of the spherical specular surface (13) must be equal to or greater than that of the stereoscopic image to be reproduced. The emitting source (20) is disposed outside of its centre of curvature (8), the emitting source (20) emitting the light rays (01, 03, 05, 07) which, upon being reflected by the spherical specular surface (13), form the bundle of rays (02, 04, 06, 08) that converge in the point of convergence (61) that occupies a different physical place separated from the emitter (20).

Figure 5 shows a conventional converging or Fresnel lens (14) acting as a focusing device, the size of which must be equal to or greater than that of the stereoscopic image to be reproduced. A light source (20) emits a beam of light (01, 03, 05, 07) which, after passing through the lens (14), converges (02, 04, 06, 08) at the point of convergence (61). Regardless of the focusing system used, whether a retroreflective screen, converging lens or mirror, all have a luminous point of convergence (61) and a luminous point of divergence (20) separated from each other. For this reason and in order to simplify the exposition in this specification, they will all be represented by the same drawing, which will be that corresponding to a converging lens as shown herein.

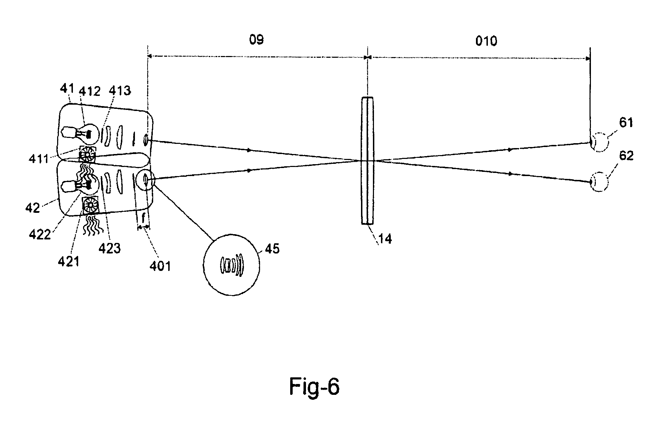

Figure 6 shows two conventional projectors (41, 42), such as those used in the aforementioned systems of the state of the art, where their small focal length f (401) with respect to the projection (09) or viewing (010) distance can be observed and, in the interior thereof, the heat dissipation elements (411, 421), lighting elements (412, 422) and focusing elements (45) which jointly occupy a large volume that prevents the centres of the optical devices (45) from being disposed sufficiently near, i.e. at the distance required by the separation between the observer's eyes (61, 62).

Figures 7 to 11 show the focusing device shown in figure 5 operating with conventional projectors, as in the aforementioned systems of the state of the art.

Figure 7 shows the geometric deformation (51, 53) of an image (52) projected onto the focusing device (14) based on the tilt angle of the optical axis (09) of the projector, originated by its movement through the positions (41, 42, 43), in order to track the horizontal movement (61, 62, 63) of the observer's eye in the systems of the state of the art. Similarly, figure 8 shows the geometric deformation (54, 56) of an image (55) projected onto the focusing device (14) based on the tilt angle of the optical axis (09) of the projector originated by its movement (44, 45, 46), in order to track the vertical movement of the observer's eye (64, 65, 66) in the previously described systems of the state of the art.

Figure 9 shows the concentration of the light beam (01, 03, 05, 07) radiating from a projector (41) on the corresponding eye of an observer (61) in conventional systems. Similarly, figure 10 shows the impossibility of positioning the optical centres of the projectors (41, 42) at an approximate distance of 65 mm, considered as being the average distance between the eyes (62, 63) of two adjacent observers in the systems considered as belonging to the state of the art.

Figure 11 shows an arrangement of multiple conventional projectors (41-48) operating with several observers with their corresponding eyes (61-68) in the systems considered as belonging to the state of the art. This figure illustrates the drawbacks of conventional systems. We can observe the difficulty of separating the projectors at the adequate distance, the need to dispose a different camera (71, 73, 75, 77) before each observer and the use of data processors (81, 83, 85, 87), which are necessary for controlling the movement of the projectors by means of electro-mechanical elements not represented herein.

Figure 12 shows a converging and image reversing optical device comprising a converging element (200) having a focal length F equal to half of the projection distance (09), which in turn is equal to the viewing distance (010), together with a horizontal image reversing optical system (21, 22). The wide focal length F allows construction of the most adequate exit pupil, such as for example a rectangular converging lens (2001), a rectangular mirror (2002), a square lens (2003) or a square mirror (2004).

Figure 13 shows a converging and image reversing optical device, corresponding to an eye, of the system that is the object of this invention, which comprises a converging element (201) having equal height (141) and width, approximately 65 mm, and its corresponding horizontal optical reverser, which comprises the flat specular surfaces (211, 221).

Figure 14 shows another embodiment of the converging and image reversing optical device, corresponding to an eye, which comprises a converging optical system having a rectangular pupil, being approximately 65 mm in width and having sufficient height (141) so as to avoid the vertical movement required to track the vertical movement of the observer's head and its corresponding horizontal optical reverser (211, 221).

Figure 15 shows a pair of converging optical systems (201, 204) in an embodiment with two optical reversals for each, for the horizontal direction (211, 212) and vertical direction (231, 232).

Figure 16 shows an example of horizontal tracking of the observer's head with the system that is the object of this invention. It shows how the image (52) projected by the converging element (202), through the horizontal reversing system (212, 222), onto the focusing device (14) does not suffer geometric deformation, always remaining the same as the optical device (50), when the converging and image reversing optical device carries out a horizontal movement (201 to 203) in order to track the movement of the observer's eye in that direction (61, 62, 63). Geometric deformation is thus avoided because the reversal generated by the converging optical element is offset by the additional reversal of the horizontal reverser, thereby allowing the optical axis of the converging element to always remain perpendicular to the surface of the focusing device (14). Details of the converging and image reversing optical device are shown in figures 13 and 14.

Figure 17 shows how the image (55) projected by the converging element (201, 202, 203) through the vertical reversing system does not suffer geometric deformation, remaining the same as the optical object (50), when the converging and image reversing optical device carries out a vertical movement (202, 203) to track the observer (64, 66), in the system that is the object of this invention. Geometric deformation is avoided because the reversal generated by the converging optical system is offset by the additional reversal of the vertical reverser, thereby allowing the optical axis of the converging element to always remain perpendicular to the surface of the focusing device (14). Details of the converging and image reversing optical device of this embodiment are shown in figure 15.

Figures 18 and 19 show the luminous flux that reaches the eye (61) of an observer in a conventional system and in the system according to the invention, respectively. We can observe that the luminous flux that reaches the observer's eye (61) with the system of the invention is the same as in conventional viewing, assuming a luminous output of nearly one in the focusing device (14).

Figure 20 shows the simplicity wherewith the system that is the object of this invention can position the optical centres of the converging elements (201, 202) at a distance to each other as small as that required by the average distance between the observer's eyes, 65 mm, or that required by the distance (203, 206) between the eyes (63, 65) of two adjacent observers. Advantageously, the system of the invention does not require the presence of cameras or data processors.

Figure 21 shows an example of the assembly of the different components of the stereoscopic reproduction system of the invention. Several observers view, with their corresponding eyes (61-68), the stereoscopic reproduction of the conventional screen (50) through the focusing device (14) without need for glasses, using the system that is the object of this invention. The converging systems (201-208) and their corresponding horizontal reversers (211, 221, 218, 228) can be observed in the figure, before which the corresponding discriminators, represented in the figure as glasses, are disposed in this particular embodiment. The elements (331, 333, 335, 337) represent the third constituent element of the system, which comprises a self-correcting servo-mechanism that responds to the movement of the observer's head and the operation of which will be explained later with the help of figures 26, 27 and 28.

Figure 22 shows several observers (61-65) with glasses viewing a conventional reproduction (50). Figures 23 and 24 show observers (61-65) viewing a conventional stereoscopic reproduction without need for glasses, thanks to the system that is the object of the invention, when only using horizontal reversal and horizontal and vertical double reversal, respectively.

Figure 25 shows the projection of the image of an observer's head (6) onto the plane (35) that contains the pair of converging elements in a system according to the invention. This operation is carried out by the focusing device (14). This device acts as a converging optical system, capturing the image of the observer (6), which is considered an optical object by said device and forming his/her image (7) on the aforementioned plane (35).

Figures 26 and 27 show the third constituent element of the system that is the object of this invention and its reaction to a movement (81) of the observer's head towards the left or towards the right, respectively. This third element is a self-correcting servo-mechanism that comprises a matrix of photosensitive cells (31, 32), an electronic unit (33) and an electromotive element (34). The observer (6) is a luminous object for the focusing device, which forms the image (7) of said observer (6) by projection onto a plane (35) that contains converging elements (201, 202). The matrix of photosensitive cells divided into two sub-matrices (31, 32) by a mirror axis (20) is disposed on this plane. If the observer (6) moves, his/her image (7) also moves over the cells that are capable of detecting this luminous change. Each of said sub-matrices sends a signal to the electronic unit (33). This unit manages a motor (34) that displaces the plane (35) containing the converging elements (201, 202), moving it along a certain distance (82). When the converging and image reversing optical device is rectangular in shape and has sufficient height, tracking of the observer's movement in a vertical direction is not necessary. If this were not the case, tracking in this direction may be implemented as mentioned earlier in relation to figure 17. It must be pointed out that if the focusing optical device (14) were to have geometric aberration, made evident by the fact that the angles (881, 882, 883) of figure 21 are not equal respectively to angles (886, 885, 884), this aberration would be offset and without practical effects, as can easily be verified.

Figure 28 shows the layout of several flat mirrors (83-86) used to increase the optical projection path. This layout can be used when the distance (09) from the converging optical element (200), shown in figure 12, to the reproduction screen (14) is less than the distance from the reproduction screen (14) to the observer (010).

Figure 29 shows a Galilean-type telescopic system, used as an example of the manner in which the size of the projected image can be increased or decreased in the system that is the object of this invention. Said telescopic system has null optical power and an angular magnification equal to the quotient of focal lengths f1 and f2 of the converging (46) and diverging (47) elements. This increase must be equal to the quotient of the optical distances that separate the converging element from the reproduction screen and from the focusing device. To this end, the focal length of the converging lens becomes proportional to the greater of the previous distances and the focal length of the divergent lens becomes equally proportional to the smaller distance. The separation between these two lenses must be equal to the difference between their focal lengths. The resulting system will have null optical power and an angular magnification equal to the quotient between the focal lengths or, in other words, to the quotient of the optical distances or quotient between the horizontal or vertical sizes of the image and its object.

Figure 30 shows a full view of an embodiment of the system that is the object of this invention. As represented in the figure, the system of the invention allows several observers (61-65) to view a conventional stereoscopic reproduction (52-55) without need for glasses. In this embodiment, the converging and image reversing optical device disposed at the first point (20) uses horizontal and vertical reversal. The figure also shows details of the system used to track (34) the observer's head.

## Claims

1. Stereoscopic reproduction system, for the observation by any number of observers of images reproduced on a projection screen (50) by a projecting system capable of differentiating two images composing a stereoscopic pair (52, 55), the stereoscopic reproduction system comprising:
- a focusing optical device (1, 13, 14) that converts any bundle of incident light rays (01, 03, 05, 07) homocentric at a first point (20) into a bundle of emergent rays (02, 04, 06, 08) homocentric at a second point (61) conjugated of the first point (20), in which second point (61) an eye of an observer is to be located; and comprising for each of said observers
- at least one pair of converging and image reversing optical devices, each converging and image reversing device being associated to an eye of an observer and comprising
a converging optical element (200-204), the optical centre thereof being positioned at the first point (20), in such a manner as to project onto the focusing optical device (1, 13, 14) one selected between the two differentiated images of the stereoscopic pair (52, 55), the projected image having the same size as its optical object located on the projection screen (50), and
an image reverser, integral with the converging optical element, to produce horizontal optical reversal (21, 22, 211-213, 221-223);
- associated to each pair of converging and image reversing devices, a discriminating means for selecting each of the two constituent images of the stereoscopic pair (52, 55);
- a mobile platform (35) for each pair of converging and image reversing devices, each platform (35) supporting a pair of said converging and image reversing devices and their discriminating means;
- a matrix of photosensitive elements (31, 32) located on a plane containing the converging elements (200-204), capable of detecting a movement of an image of the observer (7) formed thereon by the first focusing optical device (1, 13, 14) and of generating a signal;
- an electromotive element (34) capable of moving each platform (35) and the matrix of photosensitive elements; and
- an electronic unit (33) for governing the movement of the electromotive elements (34) according to the signal received from the matrix of photosensitive elements (31, 32).

2. Stereoscopic reproduction system, according to claim 1, wherein the focusing optical device (1, 13, 14) comprises a retroreflective screen formed by a matrix of simple retroreflective elements (11) disposed on a plane and a semi-transparent lamina (21) forming a non-null angle (15) with said matrix of retroreflective elements.

3. Stereoscopic reproduction system, according to claim 2, wherein the focusing optical device (1, 13, 14) comprises a second retroreflective screen formed by a matrix of simple retroreflective elements (11), the second retroreflective screen being perpendicular to the first retroreflecive screen.

4. Stereoscopic reproduction system, according to claim 1, wherein the focusing optical device (1, 13, 14) comprises a specular spherical surface or a converging Fresnel mirror.

5. Stereoscopic reproduction system, according to claim 1, wherein the focusing optical device (1, 13, 14) comprises a conventional converging lens or a converging Fresnel lens.

6. Stereoscopic reproduction system, according to any one of the preceding claims, wherein each of said converging and image reversing optical devices comprises a second image reverser integral with the converging element in order to achieve vertical optical reversal (231, 232).

7. Stereoscopic reproduction system, according to any one of the preceding claims, wherein the converging optical element (200-204) comprises at least one lens.

8. Stereoscopic reproduction system, according to any one of claims 1 to 6, wherein the converging optical element (200-204) comprises at least one mirror.

9. Stereoscopic reproduction system, according to any one of claims 1 to 6, wherein the converging optical element (200-204) comprises a system of lenses and mirrors.

10. Stereoscopic reproduction system, according to any one of the preceding claims, wherein the distance between the converging optical element (200-204) and the reproduction screen (50) is equal to the distance between the converging optical element (200-204) and the focusing device (1, 13, 14) and wherein the focal length of the converging optical element (200-204) is equal to half of said distance.

11. Stereoscopic reproduction system, according to any one of claims 1 to 9, wherein when the distance between the converging optical element (200-204) and the reproduction screen (50) differs from the distance between the converging optical element (200-204) and the focusing device (1, 13, 14), the length of the optical path associated to the smaller of the previous distances is increased until equalling the greater distance by at least two flat optical surfaces (83-86) and the focal length of the converging optical element (200-204) is equal to half of said increased length.

12. Stereoscopic reproduction system, according to any one of claims 1 to 9, wherein when the distance between the converging optical element (200-204) and the reproduction screen (50) differs from the distance between the converging optical element (200-204) and the focusing device (1, 13, 14), a telescopic system (46, 47) having null optical power and an angular magnification equal to the quotient between said two distances is interposed in the optical path between the converging optical element (200-204) and the reproduction screen (50), and wherein the focal length of the converging optical element (200-204) is equal to half of the distance between the converging optical element (200-204) and the focusing device (1, 13, 14).

13. Stereoscopic reproduction system, according to any one of the preceding claims, wherein the image reverser comprises a pair of flat specular surfaces perpendicular to each other (21, 22, 211, 221).

14. Stereoscopic reproduction system, according to any one of the preceding claims, wherein the converging optical element (200-204) has a horizontal pupil approximately 65 mm in size and a vertical pupil of sufficiently large size to allow the vertical movement of the observer and the tracking movement of the mobile platform (35) is only horizontal.

15. Stereoscopic reproduction system, according to claim 6, wherein the converging optical element (200-204) has a pupil having a horizontal and vertical size of approximately 65 mm and the tracking movement of the mobile platform (35) is both horizontal and vertical.

16. Stereoscopic reproduction method **characterised in that** it comprises the following stages:
a) provision of a stereoscopic reproduction system, according to any one of claims 1 to 15; and
b) projection of a pair of images (50) constituent of a stereoscopic pair onto the optical focusing device of the stereoscopic reproduction system.

## Patentansprüche

1. Stereowiedergabesystem für die Betrachtung von Bildern durch eine beliebige Anzahl von Betrachtern, wobei die Bilder von einem Projektionssystem, das zwei Bilder, die ein stereoskopisches Paar (52,22) bilden, unterscheiden kann, an einem Projektionsschirm (50) wiedergegeben werden, wobei das Stereowiedergabesystem aufweist:
- eine fokussierende optische Vorrichtung (1,13,14), die ein an einem ersten Punkt (20) homozentrisches Bündel eintretender Lichtstrahlen (01,03,05,07) umwandelt in ein Bündel austretender Lichtstrahlen (02,04,06,08), das an einem zweiten Punkt (61), der konjugiert zum ersten Punkt (20) ist, homozentrisch ist, wobei sich in dem zweiten Punkt (61) ein Auge eines Betrachters befinden soll;
und für jeden Betrachter aufweist:
- mindestens ein Paar konvergierender und bildumkehrender optischer Vorrichtungen, wobei jede konvergierende und bildumkehrende Vorrichtung einem Auge eines Betrachters zugeordnet ist und aufweist:
ein konvergierendes optisches Element (200-204), dessen optisches Zentrum sich an dem ersten Punkt (20) befindet, um ein aus den zwei unterschiedlichen Bildern des stereoskopischen Paars (52,55) ausgewähltes Bild auf die fokussierende optische Vorrichtung (1,13,14) zu projizieren, wobei das projizierte Bild die gleiche Größe hat wie sein auf dem Projektionsschirm (50) angeordnetes Objekt,
einen mit dem konvergierenden optischen Element integralen Bildumkehrer zum Erzeugen einer horizontalen optischen Umkehrung (21,22,211-213,221-223);
- eine mit jedem Paar konvergierender und bildumkehrender Vorrichtungen verbundene Diskriminatoreinrichtung zum Auswählen jeweils eines der zwei Einzelbilder des stereoskopischen Paars (52,55);
- eine mobile Plattform (35) für jedes Paar konvergierender und bildumkehrender Vorrichtungen, wobei jede Plattform (35) ein Paar konvergierender und bildumkehrender Vorrichtungen und ihre Diskriminatoreinrichtungen trägt;
- eine Matrix photosensitiver Elemente (31,32), die in einer Ebene, die die konvergierenden Elemente enthält, angeordnet sind und eine Bewegung eines von der ersten fokussierenden optischen Vorrichtung (1,13,14) darauf abgebildeten Bilds des Betrachters (7) detektieren können und ein Signal erzeugen können;
- ein elektromotorisches Element (34), das jede Plattform (35) und die Matrix photosensitiver Elemente bewegen kann; und
- eine elektronische Einheit (33) zum Steuern der Bewegung der elektromotorischen Elemente (34) gemäß dem von der Matrix photosensitiver Elemente (31,32) her empfangenen Signal.

2. Stereowiedergabesystem nach Anspruch 1, wobei die fokussierende optische Vorrichtung (1,13,14) einen retroreflektierenden Schirm aufweist, der aus einer Matrix einfacher retroreflektierender Elemente (11), die in einer Ebene angeordnet sind, und einer semitransparenten Platte (21), die einen Winkel (15) von ungleich null mit der Matrix retroreflektierender Elemente bildet, gebildet ist.

3. Stereowiedergabesystem nach Anspruch 2, wobei die fokussierende optische Vorrichtung (1,13,14) einen zweiten retroreflektierenden Schirm aufweist, der aus einer Matrix einfacher retroreflektierender Elemente (11) gebildet ist und senkrecht zum ersten retroreflektierenden Schirm angeordnet ist.

4. Stereowiedergabesystem nach Anspruch 1, wobei die fokussierende optische Vorrichtung (1,13,14) eine spiegelnde sphärische Oberfläche oder einen konvergierenden Fresnel-Spiegel aufweist.

5. Stereowiedergabesystem nach Anspruch 1, wobei die fokussierende optische Vorrichtung (1,13,14) eine herkömmliche konvergierende Linse oder eine konvergierende Fresnel-Linse aufweist.

6. Stereowiedergabesystem nach einem der vorstehenden Ansprüche, wobei jede der konvergierenden und bildumkehrenden optischen Vorrichtungen einen mit dem konvergierenden Element integralen zweiten Bildumkehrer aufweist, um eine vertikale optische Umkehrung (231,232) zu erzielen.

7. Stereowiedergabesystem nach einem der vorstehenden Ansprüche, wobei das konvergierende optische Element (200-204) mindestens eine Linse aufweist.

8. Stereowiedergabesystem nach einem der Ansprüche 1 bis 6, wobei das konvergierende optische Element (200-204) mindestens einen Spiegel aufweist.

9. Stereowiedergabesystem nach einem der Ansprüche 1 bis 6, wobei das konvergierende optische Element (200-204) ein System von Linsen und Spiegeln aufweist.

10. Stereowiedergabesystem nach einem der vorstehenden Ansprüche, wobei der Abstand zwischen dem konvergierenden optischen Element (200-204) und dem Wiedergabeschirm (50) gleich dem Abstand zwischen dem konvergierenden optischen Element (200-204) und der fokussierenden Vorrichtung (1,13,14) ist und wobei die Fokuslänge des konvergierenden optischen Elements (200-204) gleich der Hälfte des Abstands ist.

11. Stereowiedergabesystem nach einem der Ansprüche 1 bis 9, wobei, wenn der Abstand zwischen dem konvergierenden optischen Element (200-204) und dem Wiedergabeschirm (50) sich unterscheidet von dem Abstand zwischen dem konvergierenden optischen Element (200-204) und der fokussierenden Vorrichtung (1,13,14), die Länge des optischen Pfads, der dem kleineren der vorstehend genannten Abstände entspricht, durch mindestens zwei flache optische Oberflächen (83-86) vergrößert wird, bis sie gleich dem größeren Abstand ist und die Fokuslänge des konvergierenden optischen Elements gleich der Hälfte der vergrößerten Länge ist.

12. Stereowiedergabesystem nach einem der Ansprüche 1 bis 9, wobei, wenn der Abstand zwischen dem konvergierenden optischen Element (200-204) und dem Wiedergabeschirm (50) sich unterscheidet von dem Abstand zwischen dem konvergierenden optischen Element (200-204) und der fokussierenden Vorrichtung (1,13,14), ein teleskopisches System (46,47), das eine optische Leistung von Null hat und eine Winkelvergrößerung gleich dem Quotienten der zwei Abstände hat, in den optischen Pfad zwischen dem konvergierenden optischen Element (200-204) und dem Wiedergabeschirm (50) angeordnet wird, und wobei die Fokuslänge des konvergierenden optischen Elements (200-204) gleich der Hälfte des Abstands zwischen dem konvergierenden optischen Element (200-204) und der fokussierenden Vorrichtung (1,13,14) ist.

13. Stereowiedergabesystem nach einem der vorstehenden Ansprüche, wobei der Bildumkehrer zwei flache zueinander senkrechte spiegelnde Oberflächen (21,22,211,221) aufweist.

14. Stereowiedergabesystem nach einem der vorstehenden Ansprüche, wobei das konvergierende optische Element (200-204) eine horizontale Pupille von ungefähr 65mm Größe und eine ausreichend große vertikale Pupille aufweist, um die vertikale Bewegung des Betrachters zu erlauben, und die nachführende Bewegung der mobilen Plattform (35) nur horizontal ist.

15. Stereowiedergabesystem nach Anspruch 6, wobei das konvergierende optische Element (200-204) eine Pupille mit einer horizontalen und vertikalen Größe von ungefähr 65mm aufweist und die nachführende Bewegung der mobilen Plattform (35) sowohl horizontal wie auch vertikal ist.

16. Stereoskopisches Wiedergabeverfahren, **dadurch gekennzeichnet, dass** es die folgenden Schritte aufweist:
a) Bereitstellen eines Stereowiedergabesystems nach einem der Ansprüche 1 bis 15; und
b) Projizieren von zwei Bildern (50), die ein stereoskopisches Paar bilden, auf die optische fokussierende Vorrichtung des Stereowiedergabesystems.

## Revendications

1. Système de reproduction stéréoscopique pour l'observation, par n'importe quel nombre d'observateurs, d'images reproduites sur un écran de projection (50) par un système de projection capable de différencier deux images composant une paire stéréoscopique (52, 55), le système de reproduction stéréoscopique comprenant :
- un dispositif optique de mise au point (1, 13, 14) qui convertit tout faisceau de rayons lumineux incidents (01, 03, 05, 07) homocentriques au niveau d'un premier point (20) en un faisceau de rayons émergents (02, 04, 06, 08) homocentriques au niveau d'un deuxième point (61) conjugué du premier point (20), l'oeil d'un observateur devant être situé dans le deuxième point (61), et comprenant pour chacun des dits observateurs,
- au moins une paire de dispositifs optiques de convergence et d'inversion de l'image, chaque dispositif de convergence et d'inversion de l'image étant associé à l'oeil d'un observateur et comprenant
- un élément optique convergent (200-204), le centre optique de celui-ci étant positionné au niveau du premier point (20), de manière à projeter sur le dispositif optique de mise au point (1, 13, 14) une image choisie parmi les deux images différenciées de la paire stéréoscopique (52, 55), l'image projetée ayant la même taille que son objet optique situé sur l'écran de projection (50), et
- un inverseur d'image solidaire de l'élément optique convergent, pour produire une inversion optique horizontale (21, 22, 211-213, 221-223),
- associé à chaque paire de dispositifs de convergence et d'inversion de l'image, un moyen de discrimination pour sélectionner chacune des deux images constituant la paire stéréoscopique (52, 55),
- une plateforme mobile (35) pour chaque paire de dispositifs de convergence et d'inversion de l'image, chaque plate-forme (35) supportant une paire des dits dispositifs de convergence et d'inversion de l'image et leur moyen de discrimination,
- une matrice d'éléments photosensibles (31, 32) située dans un plan contenant les éléments convergents (200-204), capable de détecter le mouvement d'une image de l'observateur (7) formée sur celle-ci par le premier dispositif optique de mise au point (1, 13, 14) et la production d'un signal,
- un élément électromoteur (34) capable de déplacer chaque plateforme (35) et la matrice d'éléments photosensibles, et
- une unité électronique (33) pour gouverner le mouvement des éléments électromoteurs (34) selon le signal reçu de la matrice d'éléments photosensibles (31, 32).

2. Système de reproduction stéréoscopique, selon la revendication 1, dans lequel le dispositif optique de mise au point (1, 13, 14) comprend un écran rétroréfléchissant formé par une matrice d'éléments rétroréfléchissants simples (11) disposés dans un plan et une lame semi-transparente (21) formant un angle non-nul (15) avec la dite matrice d'éléments rétroréfléchissants.

3. Système de reproduction stéréoscopique selon la revendication 2, dans lequel le dispositif optique de mise au point (1, 13, 14) comprend un deuxième écran rétroréfléchissant formé par une matrice d'éléments rétroréfléchissants simples (11), le deuxième écran rétroréfléchissant étant perpendiculaire au premier écran rétroréfléchissant.

4. Système de reproduction stéréoscopique selon la revendication 1, dans lequel le dispositif optique de mise au point (1, 13, 14) comprend une surface spéculaire sphérique ou un miroir de Fresnel convergent.

5. Système de reproduction stéréoscopique selon la revendication 1, dans lequel le dispositif optique de mise au point (1, 13, 14) comprend une lentille convergente conventionnelle ou une lentille de Fresnel convergente.

6. Système de reproduction stéréoscopique selon l'une quelconque des revendications précédentes, dans lequel chacun des dits dispositifs de convergence et d'inversion de l'image comprend un deuxième inverseur de l'image solidaire de l'élément convergent afin de réaliser une inversion optique verticale (231, 232).

7. Système de reproduction stéréoscopique selon l'une quelconque des revendications précédentes, dans lequel l'élément optique convergent (200-204) comprend au moins une lentille.

8. Système de reproduction stéréoscopique selon l'une quelconque des revendications 1 à 6, dans lequel l'élément optique convergent (200-204) comprend au moins un miroir.

9. Système de reproduction stéréoscopique, selon l'une quelconque des revendications 1 à 6, dans lequel l'élément optique convergent (200-204) comprend un système de lentilles et de miroirs.

10. Système de reproduction stéréoscopique selon l'une quelconque des revendications précédentes, dans lequel la distance entre l'élément optique convergent (200-204) et l'écran de reproduction (50) est égale à la distance entre l'élément optique convergent (200-204) et le dispositif de mise au point (1, 13, 14) et dans lequel la distance focale de l'élément optique convergent (200-204) est égale à la moitié de la dite distance.

11. Système de reproduction stéréoscopique selon l'une quelconque des revendications 1 à 9, dans lequel quand la distance entre l'élément optique convergent (200-204) et l'écran de reproduction (50) diffère de la distance entre l'élément optique convergent (200-204) et le dispositif de mise au point (1, 13, 14), la longueur du chemin optique associé à la plus petite des distances précédentes est augmentée jusqu'à être égale à la plus grande distance par au moins deux surfaces optiques plates (83-86) et la distance focale de l'élément optique convergent (200-204) est égale à la moitié de la dite longueur accrue.

12. Système de reproduction stéréoscopique selon l'une quelconque des revendications 1 à 9, dans lequel quand la distance entre l'élément optique convergent (200-204) et l'écran de reproduction (50) diffère de la distance entre l'élément optique convergent (200-204) et le dispositif de mise au point (1, 13, 14), un système télescopique (46, 47) ayant une puissance optique nulle et un agrandissement angulaire égal au quotient entre les dites deux distances est interposé dans le trajet optique entre l'élément optique convergent (200-204) et l'écran de reproduction (50), et où la distance focale de l'élément optique convergent (200-204) est égale à la moitié de la distance entre l'élément optique convergent (200-204) et le dispositif de mise au point (1, 13, 14).

13. Système de reproduction stéréoscopique selon l'une quelconque des revendications précédentes, dans lequel l'inverseur d'image comprend une paire de surfaces spéculaires plates perpendiculaires l'une par rapport à l'autre (21, 22, 211, 221).

14. Système de reproduction stéréoscopique selon l'une quelconque des revendications précédentes, dans lequel l'élément optique convergent (200-204) a une pupille horizontale d'environ 65 mm en taille et une pupille verticale d'une taille suffisamment grande pour permettre le mouvement vertical de l'observateur et où le mouvement de suivi de la plateforme mobile (35) est uniquement horizontal.

15. Système de reproduction stéréoscopique selon la revendication 6, dans lequel l'élément optique convergent (200-204) a une pupille ayant une taille horizontale et une taille verticale d'approximativement 65 mm et où le mouvement de suivi de la plateforme mobile (35) est à la fois horizontal et vertical.

16. Méthode de reproduction stéréoscopique, **caractérisée en ce qu'**elle comprend les étapes suivantes :
a) prévoir un système de reproduction stéréoscopique selon l'une quelconque des revendications 1 à 15, et
b) projeter une paire d'images (50) constituant une paire stéréoscopique sur le dispositif optique de mise au point du système de reproduction stéréoscopique.
